# EUROPEAN PATENT SPECIFICATION

(11) **EP 4 451 397 B1**
(45) Date of publication and mention of the grant of the patent: **02.12.2026**
(21) Application number: 23912733.5
(22) Date of filing: 19.12.2023
(51) Int. Cl.: H01M 10/04, H01M 10/0587

(54) **MANUFACTURING APPARATUS AND MANUFACTURING METHOD FOR ELECTRODE ASSEMBLY**
VORRICHTUNG UND VERFAHREN ZUR HERSTELLUNG EINER ELEKTRODENANORDNUNG
APPAREIL DE FABRICATION ET PROCÉDÉ DE FABRICATION D'ENSEMBLE ÉLECTRODE

(30) Priority: 26.12.2022 KR 20220184180
(43) Date of publication of application: 23.10.2024
(73) Proprietor: LG Energy Solution, Ltd., Seoul 07335 (KR)
(72) Inventor: YOU, Jong Seong, Daejeon 34122 (KR); KIM, Min Ki, Daejeon 34122 (KR)
(74) Representative: Goddar, Heinz J.
(86) International application number: PCT/KR2023/020972
(87) International publication number: WO 2024/144058

(56) References cited:
- CN-U- 211 017 293
- JP-A- 2012 022 813
- JP-A- 2012 022 813
- JP-A- 2017 226 510
- JP-A- 2017 226 510
- JP-B2- 2 811 837
- KR-A- 20220 042 685
- US-A1- 2022 363 502

## Description

### [Technical Field]

This application claims priority to and the benefit of Korean Patent Application No. 10-2022-0184180 filed with the Korean Intellectual Property Office on December 26, 2022.

The present invention relates to an apparatus and method for manufacturing an electrode assembly.

### [Background Art]

In general, a secondary battery refers to a battery that may be charged and discharged, unlike a primary battery that cannot be charged. The secondary batteries are widely used in cutting-edge electronic device fields such as phones, laptop computers, and camcorders.

The stability of the secondary battery may be ensured by performing a stability test that compresses one surface of the secondary battery with a pressing machine and then measures an internal short circuit.

Depending on shapes of battery casings, the secondary batteries are classified into a cylindrical or angular battery in which an electrode assembly is embedded in a cylindrical or angular metal battery casing, and a pouch-type battery in which an electrode assembly is embedded in a pouch-type battery casing provided in the form of a laminated aluminum sheet.

In addition, the electrode assembly embedded in the battery casing is a power generation element configured to be chargeable and dischargeable and having a stacked structure including a positive electrode, a separator, and a negative electrode. The electrode assemblies are classified into a folding-type electrode assembly (jelly-roll-type electrode assembly) made by winding elongated sheet-type positive and negative electrodes coated with an active material in a state in which a separator is interposed between the positive and negative electrodes, and a stack-type electrode assembly made by sequentially stacking a plurality of positive and negative electrodes each having a predetermined size in a state in which separators are interposed between the positive and negative electrodes. Among the electrode assemblies, the advantage of the jelly-roll-type electrode assembly is that the jelly-roll-type electrode assembly is easy to manufacture and has a high energy density per weight.

In the related art, the jelly-roll-type electrode assembly may have a structure in which a positive electrode is shorter in length than a separator, and a negative electrode non-coated portion is wound around an outermost periphery thereof. Further, an apparatus for manufacturing the jelly-roll-type electrode assembly in the related art includes a push roller that pushes an outer periphery of the jelly-roll-type electrode assembly so that the jelly-roll-type electrode assembly is not unwound before an end of the negative electrode non-coated portion is taped.

When the separator of the electrode assembly in the related art is cut, a winding force of the separator is reduced, which reduces a force applied to the positive electrode by the separator.

There may occur a section in which the separator is pressed toward a center of a mandrel, and the wound positive electrode rotates without being fixed to the push roller. In this case, there occurs a problem in that the separator positioned on one surface of the positive electrode is bounced off by the positive electrode by an elastic force that unwinds the positive electrode, and the separator is folded by the elastic force of the positive electrode in a direction in which the positive electrode is positioned.

US 2022/363502 A1 describes a winding machine for separator that includes a base plate, an electrode feeding mechanism, a winding mechanism, a separator cutting mechanism, and a separator compounding mechanism. The winding mechanism includes a winding head and three winding needles rotatably provided on the winding head. The winding needle located at the winding position can adsorb a separator end after the cutting, and wind the separator end on an outer circumferential surface of the corresponding winding needle.

### [Detailed Description of the Invention]

### [Technical Problem]

The present invention has been made in an effort to solve the above-mentioned problem in the related art, and an object of the present invention is to provide an apparatus and method for manufacturing an electrode assembly, which is capable of suppressing an elastic force of a positive electrode until a separator is completely wound, thereby preventing the separator from being folded.

### [Technical Solution]

The present invention is defined according to the subject matter of the appended independent claims. Particular embodiments are given by the additional features of the appended dependent claims. An embodiment of the present invention provides an apparatus for manufacturing an electrode assembly, the apparatus including: a mandrel configured to wind an electrode assembly including a first electrode, a first separator, a second electrode, and a second separator; a first fixing part configured to fix an outermost periphery of the electrode assembly; and a second fixing part positioned to be spaced apart from the first fixing part along a circumference of the mandrel and configured to fix the first and second separators, in which the first fixing part includes a position adjustment part configured to adjust a position thereof in accordance with a winding thickness of the electrode assembly.

The embodiment of the present invention provides the apparatus for manufacturing an electrode assembly, in which the first fixing part includes: a support part; and a fixing roller provided to be in contact with the outermost periphery of the electrode assembly and configured to fix the electrode assembly, and in which the position adjustment part is positioned between the support part and the fixing roller.

The embodiment of the present invention provides the apparatus for manufacturing an electrode assembly, in which the first fixing part further includes a connection part configured to connect the support part and the fixing roller, and in which the connection part includes: a first connection part having one end coupled to the support part; a second connection part having one end coupled to the fixing roller, and the other end coupled to the first connection part, and a rotary part configured to enable the second connection part to be moved by the position adjustment part.

The embodiment of the present invention provides the apparatus for manufacturing an electrode assembly further including: a movement rail coupled to the first fixing part and configured to move the first fixing part.

The embodiment of the present invention provides the apparatus for manufacturing an electrode assembly further including: a cutting part configured to cut the first and second separators, in which the cutting part cuts the first and second separators so that a length of each of the first and second separators is longer than a length of the second electrode.

The first fixing part fixes the electrode assembly wound around the mandrel before winding end portions of the first and second separators are fixed to the second fixing part.

Another embodiment of the present invention provides a method of manufacturing an electrode assembly, the method including: a winding step of manufacturing an electrode assembly by winding a first electrode, a first separator, a second electrode, and a second separator around the mandrel; a first fixing step of fixing an outermost periphery of the electrode assembly to a first fixing part; and a second fixing step of fixing ends of the first and second separators to a second fixing part by rotating the mandrel.

Another embodiment of the present invention provides the method of manufacturing an electrode assembly, in which in the first fixing step, the first fixing part is moved in a direction in which the mandrel is positioned, and the first fixing part and the wound object are in contact with each other.

The first and second separators are fixed by the first fixing part until winding distal ends are fixed to the second fixing part.

Another embodiment of the present invention provides the method of manufacturing an electrode assembly, in which the first fixing step includes a cutting step of cutting the first and second separators by using a cutting part, and in which the cutting part cuts the first and second separators so that a length of each of the first and second separators is longer than a length of the positive electrode.

### [Advantageous Effects]

According to the apparatus and method for manufacturing an electrode assembly according to the embodiment of the present invention, the first fixing part is provided to fix the positive electrode until the end of the separator is fixed to the second fixing part, thereby suppressing an elastic force of the positive electrode, preventing the separator from being folded, and reducing a defect of the secondary battery.

### [Brief Description of Drawings]

FIG. 1 is a cross-sectional view illustrating an apparatus for manufacturing an electrode assembly according to an embodiment of the present invention.
FIG. 2 is a cross-sectional view illustrating a first fixing part according to the embodiment of the present invention.
FIG. 3 is a cross-sectional view illustrating a first fixing part according to another embodiment of the present invention.
FIG. 4 is a cross-sectional view illustrating a first fixing part according to still another embodiment of the present invention.

### [Explanation of Reference Numerals and Symbols]

- 100:: Apparatus for manufacturing electrode assembly
- 1:: First electrode, negative electrode
- 2:: Second electrode, positive electrode
- 3:: First separator
- 4:: Second separator
- 10:: Mandrel
- 20:: First fixing part
- 21:: Support part
- 22:: Connection part
- 22a:: First connection part
- 22b:: Second connection part
- 23:: Fixing roller
- 24:: Position adjustment part
- 30:: Second fixing part
- C:: Rotary shaft

### [Best Mode]

The detailed description of the present invention is provided to completely explain the present invention to a person with ordinary skill in the art. Throughout the specification, unless explicitly described to the contrary, when one component "comprises (includes)" another component or "characterized by" having a certain structure and a certain shape, this means that other components, structures, and shapes may be included without being excluded.

The present invention may be variously modified and may have various embodiments, and specific embodiments will be described in detail in the detailed description. However, the description of the embodiments is not intended to limit the contents of the present invention, but it should be understood that the present invention is to cover all modifications, equivalents and alternatives falling within the technical scope of the present invention.

Hereinafter, the present invention will be described in detail with reference to the drawings. However, the drawings are intended to illustratively describe the present invention, and the scope of the present invention is not limited by the drawings.

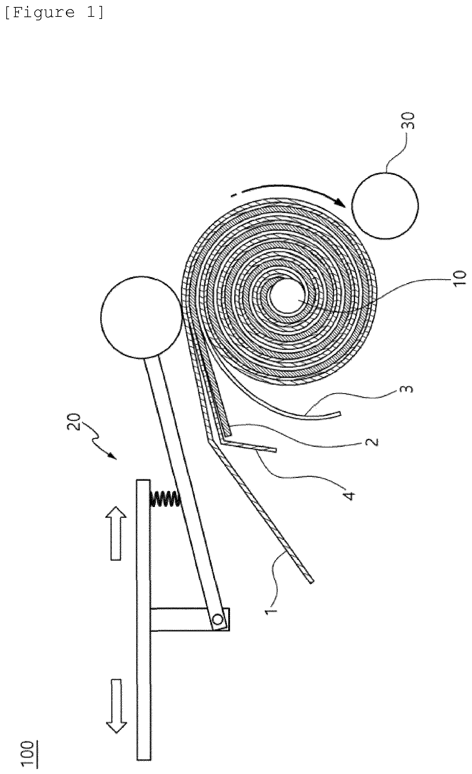

FIG. 1 is a cross-sectional view illustrating an apparatus 100 for manufacturing an electrode assembly according to an embodiment of the present invention. The apparatus 100 for manufacturing an electrode assembly includes a mandrel 10, a cutting part (not illustrated), a first fixing part 20, and a second fixing part 30.

The mandrel 10 serves to wind a first electrode 1, a first separator 3, a second electrode 2, and a second separator 4. In the embodiment, the mandrel 10 may have a cylindrical shape or a rod shape. A groove having a predetermined length may be provided in a surface of the mandrel 10 in a direction toward a center of the mandrel 10, and winding-start end portions of the first separator 3 and second separator 4 may be fixed to the groove.

The mandrel 10 may rotate clockwise or counterclockwise to wind the first electrode 1, the first separator 3, the second electrode 2, and the second separator 4. The first electrode 1, the first separator 3, the second electrode 2, and the second separator 4, which are wound around the mandrel 10, may be precursors or wound objects of an electrode assembly. The precursor of the electrode assembly may have a jelly-roll structure.

The apparatus 100 for manufacturing an electrode assembly according to the present invention may further include a drive part (not illustrated) configured to rotate the mandrel 10. The drive part may be coupled to one side of the mandrel 10 and provide a rotational force to the mandrel 10.

In the case of the electrode assembly according to the present invention, the first electrode 1, the first separator 3, the second electrode 2, and the second separator 4 may be wound in this order, and the first electrode 1 or a non-coated portion of the first electrode may be wound around an outermost periphery of the electrode assembly. In the embodiment, the first electrode 1 is a negative electrode, and the non-coated portion of the first electrode is a negative electrode non-coated portion to be described below. That is, the electrode assembly according to the present invention includes a structure in which a negative electrode current collector is wound around an outermost periphery thereof. Further, in the present invention, the precursor of the electrode assembly means a state made before the first electrode 1, the first separator 3, the second electrode 2, and the second separator 4 are completely wound. The electrode assembly means a state in which the first electrode 1, the first separator 3, the second electrode 2, and the second separator 4 are completely wound, and a tape is attached to a winding end portion of the negative electrode non-coated portion.

The electrode assembly refers to a power generation element including the second electrode 2, the first electrode 1, and the separators 3 and 4 positioned between the second electrode 2 and the first electrode 1 and configured to be chargeable and dischargeable.

The second electrode 2, i.e., the positive electrode may include a positive electrode current collector, a positive electrode active material portion, and a positive electrode non-coated portion. The positive electrode current collector may include a thin metal plate excellent in conductivity, e.g., an aluminum (Al) foil.

The positive electrode 2 is made by coating any one of or both opposite surfaces of the positive electrode current collector with a positive electrode active material. A region in which the positive electrode active material is applied is the positive electrode active material portion, and a region in which no positive electrode active material is applied is the positive electrode non-coated portion. Because no positive electrode active material layer is applied onto the positive electrode non-coated portion, the positive electrode non-coated portion may be joined to a first electrode tab.

The positive electrode active material may include lithium cobalt oxide having high working voltage and excellent capacity characteristics, lithium nickel oxide having high reversible capacity and used to easily implement a high-capacity battery, lithium nickel cobalt oxide made by substituting a part of nickel with cobalt, lithium nickel cobalt metal oxide made by substituting a part of nickel with manganese, cobalt, or aluminum, lithium manganese-based oxide having excellent thermal stability and made with low costs, and lithium iron phosphate having excellent stability.

The first electrode, i.e., the negative electrode 1 may include a negative electrode current collector, a negative electrode active material portion, and a negative electrode non-coated portion. The negative electrode current collector may include a thin metal plate excellent in conductivity, e.g., a copper (Cu) or nickel (Ni) foil.

The negative electrode 1 is made by coating one surface or two opposite surfaces of the negative electrode current collector with a negative electrode active material. The negative electrode active material portion is formed by being coated with a negative electrode active material or applying the negative electrode active material. The negative electrode non-coated portion is a region in which no negative electrode active material is applied or a region that is not coated with the negative electrode active material. The negative electrode non-coated portion is a region in which the negative electrode current collector is exposed. Because no negative electrode active material is applied onto the negative electrode non-coated portion, the negative electrode non-coated portion may be joined to a second electrode tab.

For example, the negative electrode active material may be crystalline carbon, amorphous carbon, carbon composite, carbon material such as carbon fiber, lithium metal, lithium alloy, or the like. In this case, for example, the negative electrode active material may further include non-graphite-based SiO (silica), SiC (silicon carbide), or the like to design a high capacity.

The first and second electrode tabs may serve to transfer electrons, which are collected on the current collector, to an external circuit and protrude in directions in which the first and second electrode tabs face each other with respect to the electrode assembly having the jelly-roll structure.

The separators 3 and 4 may each serve to prevent an internal short circuit that may be caused by contact between the positive electrode 2 and the negative electrode 1. The separators 3 and 4 may each include a porous material so that ions move smoothly between the electrodes.

In the embodiment, the separators 3 and 4 may each include a base layer made of a porous material. For example, the base layer may include any one selected from a group consisting of polyethylene (PE), polystyrene (PS), polypropylene (PP), and a copolymer of polyethylene (PE) and polypropylene (PP).

In another embodiment, the separators 3 and 4 may each include a safety reinforced separator (SRS). That is, the separators 3 and 4 may include the base layer made of a porous material, and a coating layer made by coating the base layer with a slurry mixture made by mixing inorganic particles and a binder polymer. In particular, the coating layer has a porous structure including ceramic particles and included in a base of the separator and has a uniform porous structure formed by empty spaces (interstitial volume) between the ceramic particles which are components of the active layer.

The coating layer may include ceramic particles including at least one selected from a group consisting of alumina, silica, TiO₂, SiC, and MgAl₂O₄. The coating layer included as described above may improve the safety of the electrode assembly. Further, the coating layer may further include lithium salt.

The cutting part cuts the first separator 3 and second separator 4. The cutting part may cut the first separator 3 and second separator 4 so that a length of each of the first separator 3 and second separator 4 is longer than a length of the negative electrode active material portion and a length of the positive electrode active material portion. In this case, the length means a distance between two opposite ends of the negative electrode 1, the first separator 3, the positive electrode 2, and the second separator 4 positioned in a direction in which the negative electrode 1, the first separator 3, the positive electrode 2, and the second separator 4 move to the mandrel 10.

The type and shape of the cutting part are not specially limited as long as the cutting part may cut the first separator 3 and second separator 4.

The first fixing part 20 may fix the outermost periphery of the electrode assembly. Specifically, the first fixing part 20 is in contact with the outermost periphery of the wound object and fixes the outermost periphery of the wound object to maintain a state in which the wound object is wound around the mandrel 10. In other words, the first fixing part 20 may fix a wound state of the wound object by pressing the outermost periphery of the wound object toward the center of the mandrel 10. The negative electrode, particularly the negative electrode non-coated portion of the wound object may be in contact with the first fixing part 20.

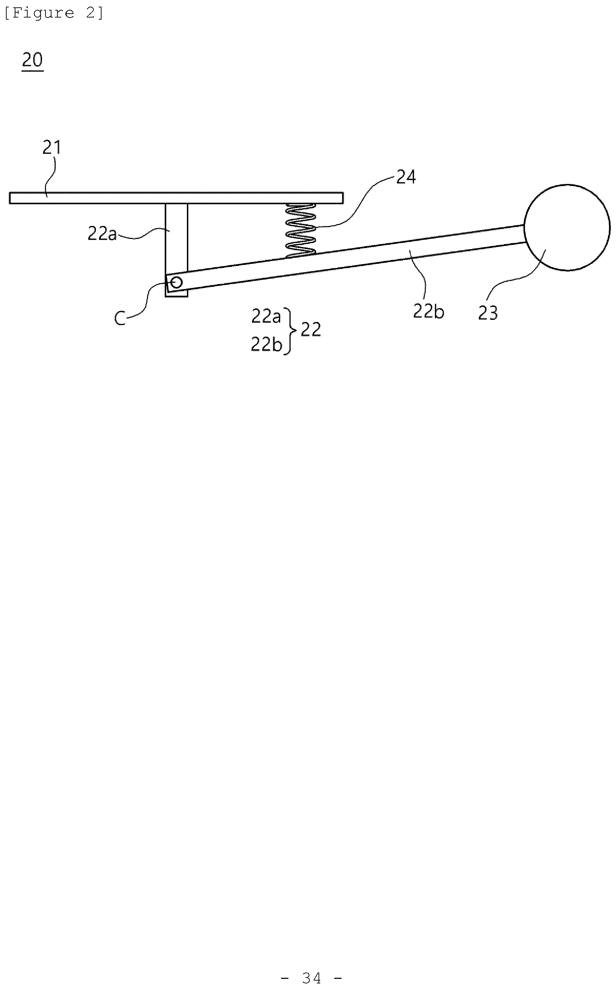

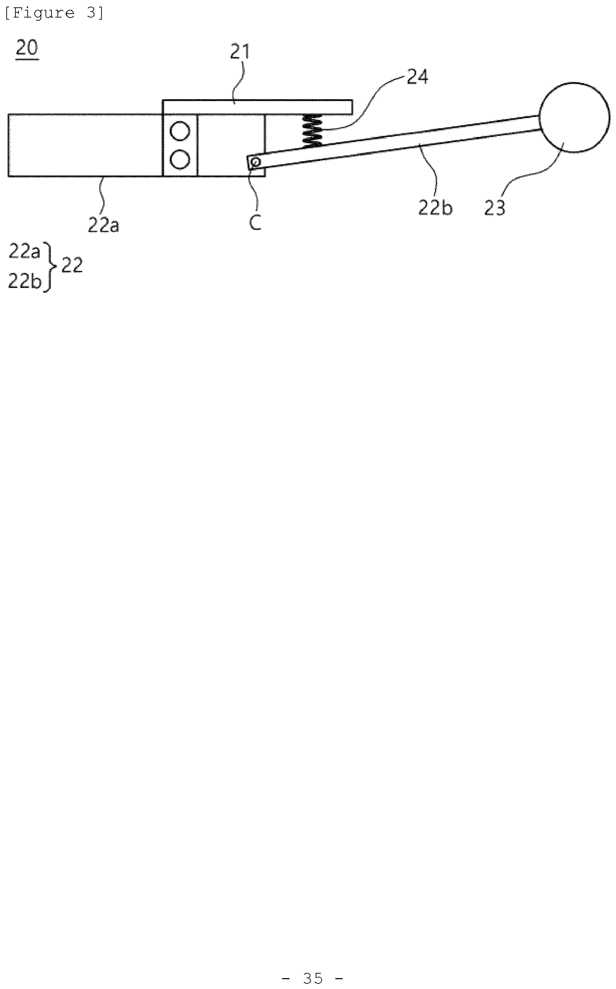

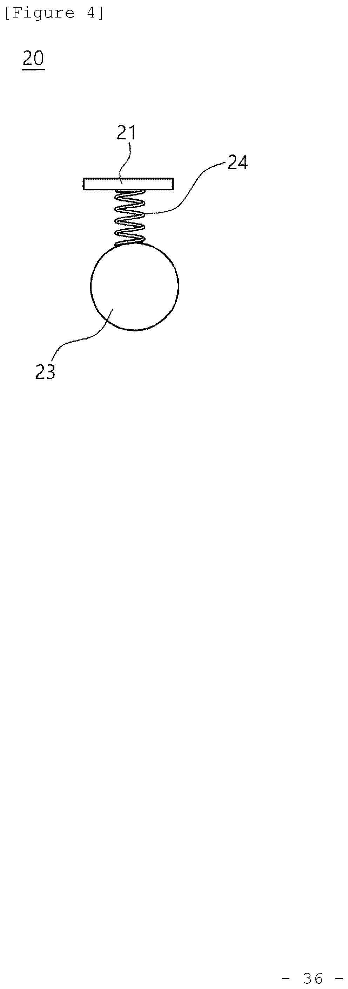

FIG. 2 is a cross-sectional view illustrating the first fixing part 20 according to the embodiment of the present invention, FIG. 3 is a cross-sectional view illustrating the first fixing part 20 according to another embodiment of the present invention, and FIG. 4 is a cross-sectional view illustrating the first fixing part 20 according to still another embodiment of the present invention.

In the embodiment, the first fixing part 20 includes a support part 21, a fixing roller 23, and a position adjustment part 24. In another embodiment and still another embodiment, the first fixing part 20 includes the support part 21, a connection part 22, the fixing roller 23, and the position adjustment part 24.

The support part 21 is fixed to another component, a wall surface, a ground surface, or the like and supports the first fixing part 20.

The connection part 22 connects the fixing roller 23 and the support part 21 that will be described below. The connection part 22 is positioned on one surface of the support part 21. Further, the connection part 22 may include a first connection part 22a having one end coupled to the support part 21, a second connection part 22b having one end coupled to the fixing roller 23, and the other end coupled to the first connection part 22a and a rotary part C configured to enable the second connection part 22b to be moved by the position adjustment part 24.

For example, the first connection part 22a may extend in a direction perpendicular to the support part 21. In other words, the first connection part 22a may extend while defining a right angle with respect to one surface of the support part 21.

Alternatively, the first connection part 22a may serve to support the second connection part 22b. The first connection part 22a may be provided on one surface of the support part 21, positioned in parallel with the support part 21, and extend in a direction opposite to a direction in which the position adjustment part 24 is positioned. In this case, the first connection part 22a may partially overlap the support part 21, and the support part 21 and the first connection part 22a may be coupled by means of a hinge.

The second connection part 22b may be positioned between the fixing roller 23 and the first connection part 22a and rotated or moved by the position adjustment part 24.

The connection part 22 of the first fixing part 20 according to another embodiment may extend in the direction perpendicular to the support part 21. In this case, the second connection part 22b may have an angle of 180° or less with respect to the first connection part 22a. In particular, an angle defined between the second connection part 22b and the first connection part 22a may be 10° to 150°, more particularly 30° to 120°.

In case that the connection part 22 extends in parallel with the support part 21 according to still another embodiment, the fixing roller 23, i.e., the second connection part 22b may have an angle of 90° or less with respect to the support part 21 or the connection part 22. In particular, an angle defined between the second connection part 22b and the support part 21 or between the second connection part 22b and the first connection part 22a may be 10° to 90°, more particularly 30° to 90°.

The fixing roller 23 may come into contact with the outermost periphery of the wound object wound around the mandrel 10 and fix the wound object before the separators 3 and 4 are cut or at the same time when the separators 3 and 4 are cut. That is, the fixing roller 23 may press and fix winding distal ends of the positive electrode 2 and the separators 3 and 4 of the wound object.

The first fixing part 20 according to the present invention fixes a part of the positive electrode 2, i.e., the winding end portion of the positive electrode 2 before the separators 3 and 4 are cut or at the same time when the separators 3 and 4 are cut. Therefore, it is possible to prevent a problem in that the separators 3 and 4 are bounced off by elasticity by the positive electrode 2 while the separators 3 and 4 are cut, which damages the separators 3 and 4 or folds the separators 3 and 4.

The fixing roller 23 moves in the direction in which the mandrel 10 is positioned, and the fixing roller 23 comes into contact with a part of the wound object wound around the mandrel 10 and presses the wound object. In this case, the wound object has a structure in which the negative electrode non-coated portion is not wound around the outermost periphery of the wound object after the negative electrode 1, the first separator 3, the positive electrode 2, and the second separator 4 are wound multiple times. Therefore, even though the thickness of the wound object increases as the negative electrode non-coated portion is wound, the fixing roller 23 may be rotated by a rotary shaft and accommodate the change in thickness of the wound object.

The position adjustment part 24 is positioned between one surface of the fixing roller 23 and one surface of the support part 21 and provides an elastic force to the fixing roller 23. The position adjustment part 24 may include a material having a restoring force. For example, the position adjustment part 24 may include an elastic member, and the elastic member may include any one of silicone, rubber, and a spring.

The fixing roller 23 may press the wound object with the restoring force of the position adjustment part 24. In the embodiment, the elastic force or restoring force of the position adjustment part 24 may increase as the angle defined between the fixing roller 23 and the connection part 22 decreases. When the elastic force or restoring force of the position adjustment part 24 pushes the support part 21 and the fixing roller 23, the fixing roller 23 may press and fix the wound object by receiving the elastic force from the position adjustment part 24 in the direction in which the wound object is positioned.

The first fixing part 20 may move in a first direction in which the mandrel 10 is positioned and a second direction opposite to the first direction. Therefore, the apparatus 100 for manufacturing an electrode assembly according to the present invention may further include a movement rail (not illustrated) coupled to the first fixing part 20 and configured to move the first fixing part 20 in the first and second directions.

The second fixing part 30 is positioned to be spaced apart from the first fixing part 20 along a circumference of the mandrel 10 and fixes the ends of the first separator 3 and second separator 4. The second fixing part 30 may fix the ends of the first separator 3 and second separator 4 by coming into contact with the first fixing part 20 or coming into contact with a part of the wound object that is not fixed by the first fixing part 20.

The second fixing part 30 may move in a third direction in which the mandrel 10 is positioned and a fourth direction opposite to the third direction. Therefore, the apparatus 100 for manufacturing an electrode assembly may further include a movement part (not illustrated) configured to move the second fixing part 30 in the third and fourth directions. The shape of the movement part is not specially limited as long as the movement part may move the second fixing part 30 in the third and fourth directions.

A length of each of the first separators 3 and second separator 4 of the wound object according to the present invention may be longer than a length of the positive electrode 2. In other words, a first part, on which the positive electrode 2 is positioned, and a second part, on which the positive electrode 2 is not positioned, may be included between the first separator 3 and second separator 4. Further, a length of the second part may correspond to half the circumference of the wound object.

For example, a circumference of the wound object, around which the first separator 3 and second separator 4 and the winding distal end of the negative electrode non-coated portion are not wound, may be 50 to 80 mm. In this case, the length of the second part may be 25 to 40 mm, i.e., half the circumference of the wound object.

Further, in the apparatus 100 for manufacturing an electrode assembly according to the present invention, a spacing distance between the first fixing part 20 and the second fixing part 30 may correspond to the length of the second part of the first separator 3 and second separator 4. That is, the spacing distance between the first fixing part 20 and the second fixing part 30 may be a length corresponding to half the circumference of the wound object.

Because the spacing distance between the first fixing part 20 and the second fixing part 30 corresponds to the length of the second part of the first separator 3 and second separator 4, the first fixing part 20 may press and fix the negative electrode non-coated portion, the first separator 3, the positive electrode 2, and the second separator 4 before the ends of the first separator 3 and second separator 4, i.e., the winding distal ends of the first separator 3 and second separator 4 are fixed to the second fixing part 30.

Therefore, a free rotation section of the positive electrode 2 is not reduced or generated until the first separator 3 and second separator 4 and the negative electrode non-coated portion are completely wound, such that the elastic force of the positive electrode 2 may be suppressed, which may prevent a problem in that the first separator 3 and second separator 4 are bounced off by the positive electrode 2 by the elastic force of the positive electrode 2 and the first separator 3 and second separator 4 are folded. In this case, the free rotation section means a section from a time point at which the first separator 3 and second separator 4 are cut to a time point before the positive electrode 2 is fixed by the first fixing part 20 or the second fixing part 30.

The fixing roller 23 and the second fixing part 30 may include a material that does not chemically react with the negative electrode non-coated portion. Further, the fixing roller 23 and the second fixing part 30 may include an elastic material. For example, the fixing roller 23 and the second fixing part 30 may include any one or more of urethane, silicone, carbon, aluminum, metal, and polymer.

Further, in case that the fixing roller 23 and the second fixing part 30 are made of metal, a metal surface may be subjected to coating, plating, or physical-chemical surface treatment, such that the fixing roller 23 and the second fixing part 30 do not chemically react with the negative electrode non-coated portion.

A method of manufacturing an electrode assembly according to the present invention includes a winding step S10 of manufacturing the wound object by winding the positive electrode, the first separator, the negative electrode, and the second separator around the mandrel, a first fixing step S20 of fixing a part of the wound object by the first fixing part and cutting the first and second separators, and a second fixing step S30 of fixing the ends of the first and second separators to the second fixing part by rotating the mandrel.

The winding step S10 may include a separator fixing step S11 of fixing start ends of the first and second separators to the mandrel, a negative electrode supply step S12 of supplying the negative electrode to one surface of the second separator, and a positive electrode supply step S13 of supplying the positive electrode to one surface of the first separator.

The winding step S10 may supply the negative electrode and the positive electrode while winding the separator by rotating the mandrel after the separator fixing step S11 or wind the positive electrode, the first separator, the negative electrode, and the second separator by rotating the mandrel after stacking the positive electrode, the first separator, the negative electrode, and the second separator.

The first fixing step S20 may include a step S21 of fixing the wound object by bringing the first fixing part into contact with the wound object by moving the first fixing part in the direction in which the mandrel is positioned, and a step S22 of cutting the first and second separators.

The step S22 of cutting the first and second separators may cut the first and second separators so that the length of each of the first and second separators is longer than the length of the positive electrode. That is, the first and second separators may extend along the circumference of the wound object at the position corresponding to the winding distal end of the positive electrode. The negative electrode and the positive electrode may not be positioned between the first separator and the second separator of the extended portions.

In this case, the extended portions of the first and second separators may have a length corresponding to the half the circumference of the wound object. The first and second separators may be fixed by the first fixing part until the winding distal end is fixed to the second fixing part.

For example, when the winding distal end of the positive electrode is positioned at a rear end of the second fixing part, the first fixing part may move to fix the wound object. Further, when the first and second separators are cut by the preset lengths of the first and second separators, the elastic force of the positive electrode may be reduced by the pressing force of the first fixing part for fixing the first and second separators until the winding distal ends of the first and second separators pass the first fixing part and are fixed to the second fixing part by the rotation of the mandrel.

Further, in case that the positive electrode has the free rotation section during the process of cutting the circumference of the wound object, the separator may be folded by the elastic force of the positive electrode. In this case, the folded portion of the separator may be unfolded together with the winding by the rotation of the mandrel and the pressing force of the first fixing part for pressing the wound object.

The description of the apparatus for manufacturing an electrode assembly may be applied to the description of the method of manufacturing an electrode assembly according to the present invention.

## Claims

1. An apparatus for manufacturing an electrode assembly (100), the apparatus comprising:
a mandrel (10) configured to wind an electrode assembly comprising a first electrode (1), a first separator (3), a second electrode (2), and a second separator (4);
a first fixing part (20) configured to fix an outermost periphery of the electrode assembly; and
a second fixing part (30) positioned to be spaced apart from the first fixing part (20) along a circumference of the mandrel (10) and configured to fix the first and second separators (3, 4),
wherein the first fixing part (20) comprises a position adjustment part (24) configured to adjust a position thereof in accordance with a winding thickness of the electrode assembly, and
wherein the first fixing part (20) fixes the electrode assembly wound around the mandrel (10) before winding end portions of the first and second separators (3, 4) are fixed to the second fixing part (30).

2. The apparatus of claim 1, wherein the first fixing part (20) comprises:
a support part (21); and
a fixing roller (23) provided to be in contact with the outermost periphery of the electrode assembly and configured to fix the electrode assembly, and
wherein the position adjustment part (24) is positioned between the support part (21) and the fixing roller (23).

3. The apparatus of claim 2, wherein the first fixing part (20) further comprises a connection part (22) configured to connect the support part (21) and the fixing roller (23), and
wherein the connection part (22) comprises:
a first connection part (22a) having one end coupled to the support part (21);
a second connection part (22b) having one end coupled to the fixing roller (23), and the other end coupled to the first connection part (22a), and a rotary part configured to enable the second connection part (22b) to be moved by the position adjustment part (24).

4. The apparatus of claim 1, further comprising:
a movement rail coupled to the first fixing part (20) and configured to move the first fixing part (20).

5. The apparatus of claim 1, further comprising:
a cutting part configured to cut the first and second separators (3, 4),
wherein the cutting part cuts the first and second separators (3, 4) so that a length of each of the first and second separators (3, 4) is longer than a length of the second electrode (2).

6. A method of manufacturing an electrode assembly, the method comprising:
a winding step of manufacturing an electrode assembly by winding a first electrode (1), a first separator (3), a second electrode (2), and a second separator around a mandrel (10);
a first fixing step of fixing an outermost periphery of the electrode assembly to a first fixing part (20); and
a second fixing step of fixing ends of the first and second separators (3, 4) to a second fixing part (30) by rotating the mandrel (10),
wherein the first and second separators (3, 4) are fixed by the first fixing part (20) until winding distal ends are fixed to the second fixing part (30).

7. The method of claim 6, wherein in the first fixing step, the first fixing part (20) is moved in a direction in which the mandrel (10) is positioned, and the first fixing part (20) and the wound object are in contact with each other.

8. The method of claim 6, wherein the first fixing step comprises a cutting step of cutting the first and second separators (3, 4) by using a cutting part, and
wherein the cutting part cuts the first and second separators (3, 4) so that a length of each of the first and second separators (3, 4) is longer than a length of the second electrode (2).

## Patentansprüche

1. Vorrichtung zur Herstellung einer Elektrodenanordnung (100), wobei die Vorrichtung aufweist:
einen Dorn (10), der konfiguriert ist, um eine Elektrodenanordnung zu wickeln, die eine erste Elektrode (1), einen ersten Separator (3), eine zweite Elektrode (2) und einen zweiten Separator (4) aufweist;
ein erstes Befestigungsteil (20), das konfiguriert ist, um einen äußersten Umfang der Elektrodenanordnung zu befestigen; und
ein zweites Befestigungsteil (30), das von dem ersten Befestigungsteil (20) entlang eines Umfangs des Dorns (10) beabstandet positioniert ist und konfiguriert ist, den ersten Separator und den zweiten Separator (3, 4) zu befestigen,
wobei das erste Befestigungsteil (20) ein Positionseinstellteil (24) aufweist, das konfiguriert ist, eine Position davon gemäß einer Wickeldicke der Elektrodenanordnung einzustellen, und
wobei das erste Befestigungsteil (20) die um den Dorn (10) gewickelte Elektrodenanordnung befestigt, bevor Wickelendabschnitte des ersten Separators und des zweiten Separators (3, 4) an dem zweiten Befestigungsteil (30) befestigt werden.

2. Vorrichtung nach Anspruch 1, wobei das erste Befestigungsteil (20) aufweist:
ein Stützteil (21); und
eine Befestigungsrolle (23), die vorgesehen ist, um mit dem äußersten Umfang der Elektrodenanordnung in Kontakt zu stehen, und konfiguriert ist, die Elektrodenanordnung zu befestigen, und
wobei das Positionseinstellteil (24) zwischen dem Stützteil (21) und der Befestigungsrolle (23) positioniert ist.

3. Vorrichtung nach Anspruch 2, wobei das erste Befestigungsteil (20) ferner ein Verbindungsteil (22) aufweist, das konfiguriert ist, das Stützteil (21) und die Befestigungsrolle (23) zu verbinden, und
wobei das Verbindungsteil (22) aufweist:
ein erstes Verbindungsteil (22a), dessen eines Ende mit dem Stützteil (21) gekoppelt ist;
ein zweites Verbindungsteil (22b), dessen eines Ende mit der Befestigungsrolle (23) gekoppelt ist und dessen anderes Ende mit dem ersten Verbindungsteil (22a) gekoppelt ist, und ein Drehteil, das konfiguriert ist, zu ermöglichen, dass das zweite Verbindungsteil (22b) durch das Positionseinstellteil (24) bewegt wird.

4. Vorrichtung nach Anspruch 1, die ferner aufweist:
eine Bewegungsschiene, die mit dem ersten Befestigungsteil (20) gekoppelt und konfiguriert ist, um das erste Befestigungsteil (20) zu bewegen.

5. Vorrichtung nach Anspruch 1, die ferner aufweist:
ein Schneidteil, das konfiguriert ist, den ersten und den zweiten Separator (3, 4) zu schneiden,
wobei das Schneidteil den ersten und den zweiten Separator (3, 4) so schneidet, dass eine Länge jedes des ersten Separators und des zweiten Separators (3, 4) länger ist als eine Länge der zweiten Elektrode (2).

6. Verfahren zur Herstellung einer Elektrodenanordnung, wobei das Verfahren umfasst:
einen Wickelschritt zur Herstellung einer Elektrodenanordnung durch Wickeln einer ersten Elektrode (1), eines ersten Separators (3), einer zweiten Elektrode (2) und eines zweiten Separators um einen Dorn (10);
einen ersten Befestigungsschritt zum Befestigen eines äußersten Umfangs der Elektrodenanordnung an einem ersten Befestigungsteil (20); und
einen zweiten Befestigungsschritt zum Befestigen von Enden des ersten Separators und des zweiten Separators (3, 4) an einem zweiten Befestigungsteil (30) durch Drehen des Dorns (10),
wobei der erste Separator und der zweite Separator (3, 4) durch das erste Befestigungsteil (20) befestigt werden, bis distale Wickelenden an dem zweiten Befestigungsteil (30) befestigt sind.

7. Verfahren nach Anspruch 6, wobei in dem ersten Befestigungsschritt das erste Befestigungsteil (20) in einer Richtung bewegt wird, in der der Dorn (10) positioniert ist, und das erste Befestigungsteil (20) und das gewickelte Objekt miteinander in Kontakt stehen.

8. Verfahren nach Anspruch 6, wobei der erste Befestigungsschritt einen Schneidschritt zum Schneiden des ersten Separators und des zweiten Separators (3, 4) unter Verwendung eines Schneidteils aufweist, und
wobei das Schneidteil den ersten und den zweiten Separator (3, 4) so schneidet, dass eine Länge jedes des ersten Separators und des zweiten Separators (3, 4) länger ist als eine Länge der zweiten Elektrode (2).

## Revendications

1. Appareil pour la fabrication d'un ensemble d'électrodes (100), l'appareil comprenant :
un mandrin (10) configuré pour enrouler un ensemble d'électrodes comprenant une première électrode (1), un premier séparateur (3), une deuxième électrode (2), et un deuxième séparateur (4) ;
une première pièce de fixation (20) configurée pour fixer un pourtour extérieur de l'ensemble d'électrodes ; et
une deuxième pièce de fixation (30) positionnée pour être espacée de la première pièce de fixation (20) le long d'une circonférence du mandrin (10), et configurée pour fixer les premier et deuxième séparateurs (3, 4),
la première pièce de fixation (20) comprenant un élément d'ajustage de la position (24) configuré pour ajuster un emplacement de celle-ci conformément à une épaisseur d'enroulement de l'ensemble d'électrodes, et
la première pièce de fixation (20) fixant l'ensemble d'électrodes enroulé autour du mandrin (10) avant la fixation de parties terminales d'enroulement des premier et deuxième séparateurs (3, 4) sur la deuxième pièce de fixation (30).

2. Appareil selon la revendication 1, la première pièce de fixation (20) comprenant :
un élément de support (21) ; et
un rouleau de fixation (23) agencé de façon à se trouver au contact du pourtour extérieur de l'ensemble d'électrodes, et configuré pour fixer l'ensemble d'électrodes, et l'élément d'ajustage de la position (24) étant positionné entre l'élément de support (21) et le rouleau de fixation (23).

3. Appareil selon la revendication 2, la première pièce de fixation (20) comprenant en outre une pièce de connexion (22) configurée pour connecter l'élément de support (21) et le rouleau de fixation (23), et
la pièce de connexion (22) comprenant :
une première pièce de connexion (22a) dont un bout est couplé à l'élément de support (21) ;
une deuxième pièce de connexion (22b) dont un bout est couplé au rouleau de fixation (23), et l'autre bout est couplé à la première pièce de connexion (22a), et une pièce rotative configurée pour permettre le déplacement de la deuxième pièce de connexion (22b) par l'élément d'ajustage de la position (24).

4. Appareil selon la revendication 1, comprenant en outre :
une traverse de déplacement couplée à la première pièce de fixation (20), et configurée pour déplacer la première pièce de fixation (20).

5. Appareil selon la revendication 1, comprenant en outre :
une pièce de coupe configurée pour couper les premier et deuxième séparateurs (3, 4),
la pièce de coupe coupant les premier et deuxième séparateurs (3, 4) de sorte qu'une longueur de chacun des premier et deuxième séparateurs (3, 4) soit plus longue qu'une longueur de la deuxième électrode (2).

6. Procédé de fabrication d'un ensemble d'électrodes, le procédé comprenant :
une étape d'enroulement de la fabrication d'un ensemble d'électrodes comportant l'enroulement d'une première électrode (1), d'un premier séparateur (3), d'une deuxième électrode (2), et d'un deuxième séparateur autour d'un mandrin (10) ;
une première étape de fixation d'un pourtour extérieur de l'ensemble d'électrodes sur une première pièce de fixation (20) ;et
une deuxième étape de fixation de bouts des bouts des premier et deuxième séparateurs (3, 4) sur une deuxième pièce de fixation (30) par la rotation du mandrin (10),
les premier et deuxième séparateurs (3, 4) étant fixés par la première pièce de fixation (20) jusqu'à ce que les extrémités distales d'enroulement soient fixées sur la deuxième pièce de fixation (30).

7. Procédé selon la revendication 6, dans lequel, à la première étape de fixation, la première pièce de fixation (20) est déplacée dans le sens du positionnement du mandrin (10), et la première pièce de fixation (20) et l'objet enroulé sont en contact entre eux.

8. Procédé selon la revendication 6, la première étape de fixation comprenant une étape de coupe comportant la coupe des premier et deuxième séparateurs (3, 4) à l'aide d'une pièce de coupe, et
la pièce de coupe coupant les premier et deuxième séparateurs (3, 4) afin qu'une longueur de chacun des premier et deuxième séparateurs (3, 4) soit plus longue qu'une longueur de la deuxième électrode (2).
